# EUROPÄISCHE PATENTSCHRIFT

(11) **EP 0 893 341 B1**
(45) Veröffentlichungstag und Bekanntmachung des Hinweises auf die Patenterteilung: **16.06.2004**
(21) Anmeldenummer: 98890198.9
(22) Anmeldetag: 07.07.1998
(51) Int. Cl.: B64C 1/14

(54) **Fenstereinheit für Flugzeugkabinen**
Window unit for aircraft
Unité de fenêtre pour aéronef

(30) Priorität: 25.07.1997 AT 127597
(43) Veröffentlichungstag der Anmeldung: 27.01.1999
(73) Patentinhaber: Fischer Advanced Composite Components AG, 4910 Ried im Innkreis (AT)
(72) Erfinder: Stephan, Walter, Dipl.-Ing., 4973 St. Martin (AT); Filsegger, Hermann, Dipl.-Ing., 4910 Ried im Innkreis (AT)
(74) Vertreter: Köhler-Pavlik, Johann, Dipl.-Ing.

(56) Entgegenhaltungen:
- DE-A- 4 229 158
- US-A- 3 906 669
- US-A- 4 364 533

## Beschreibung

Die Erfindung betrifft eine Fenstereinheit für Flugzeugkabinen bestehend aus einem äußeren Fensterrahmen, einem inneren Fensterrahmen, einer dazwischen liegenden Fensterscheibe, allenfalls mit einer Sonnenblende oder einem Rollo, welche(s) zwischen dem inneren Fensterrahmen und einem allfälligen Abdeckrahmen angeordnet ist, wobei die Fenstereinheit in die Öffnung eines Seitenwandpaneels in der Flugzeugkabine einsetzbar ist.

Bekannte Fenstereinheiten für Flugzeugkabinen sind mit der Rückseite eines Seitenwandpaneels fix verbunden. Da die innenseitigen Fensterscheiben meist aus Acryl hergestellt sind und anfällig auf Zerkratzen sind, ist deren Tausch relativ häufig notwendig. Zu diesem Zweck muss bei herkömmlichen Fenstereinheiten das Seitenwandpaneel ausgebaut werden, wofür es darüberhinaus oft erforderlich ist, in aufwendiger Weise die Sitzreihen zu entfernen.
Zur Vermeidung eines solchen Aufwandes wurden auswechselbare Fenster in Aussparungen der Seitenwandpaneele eingebaut. Derartige Konstruktionen zeigten entweder eine relativ aufwendige Montage des Fensters oder eine unsichere Verbindung des Fensters im Seitenwandpaneel. In weiterer Folge gab es auch Schwierigkeiten mit dem Einsatz der Sonnenblenden oder Rollos zur Abdeckung der Fensterscheiben zum Schutz der Sonneneinstrahlung:

Die US 4 364 533 A beschreibt eine Fenstereinheit für Flugzeugkabinen, bei der an der Rückseite des Seitenwandpaneels Befestigungskomponenten angebracht werden, mit welchen die Fenstereinheit nach dem Einsetzen in die Öffnung des Seitenwandpaneels verschraubt werden.

Aufgabe der Erfindung ist die Schaffung von Maßnahmen, durch welche der Ein- und Ausbau einer Fenstereinheit rasch und einfach durchführbar ist so dass ein rascher Austausch der Fenstereinheit sowie ein leichter Zugang zu den im Flugzeugrumpf angeordneten Strukturscheiben ermöglicht wird, ohne dass die Seitenwandverkleidung der Flugzeugkabine entfernt werden muss. Darüberhinaus sollen die Bestandteile der Fenstereinheit ebenfalls rasch und einfach auswechselbar sein, damit allfällige Wartungsarbeiten rasch und kostengünstig durchführbar sind. Weiters soll durch die Erfindung eine sichere Verbindung der Fenstereinheit mit dem Seitenwandpaneel od. dgl. gewährleistet sein und lose Bestandteile, welche Gefahrenquellen oder zumindest Geräuschquellen darstellen können, vermieden werden. Darüberhinaus soll das Risiko einer mutwilligen oder unbewussten Zerstörung von Bestandteilen der Fenstereinheit reduziert und die Nachteile bekannter Systeme vermieden oder zumindest verringert werden.

Die Lösung der Aufagabe erfolgt durch die Merkmale des Anspruchs 1. Dadurch ist eine genaue, rasche und sichere Verbindung der gesamten Fenstereinheit mit dem Seitenwandpaneel gewährleistet. Ein Ausbau der Seitenwandpaneele oder von Sitzreihen ist nicht notwendig, wodurch der Tausch der Fenstereinheiten rasch durchgeführt werden kann und somit teure Standzeiten des Flugzeugs reduziert werden können. Gegenstücke zur Zentriereinrichtung und zu den Schnappverschlüssen können bei entsprechender Gestaltung der Zentriereinrichtung und der Schnappverschlüsse sowie des Seitenwandpaneels bzw. damit verbundenen Bauteilen im Bereich der Öffnung für die Fenstereinheit auch entfallen.

Um einen bequemen Ein- und Ausbau der Fenstereinheit zu gewährleisten sind vorteilhafterweise die Zentriereinrichtung an der unteren Seite der Fenstereinheit entsprechend einer Uhrstellung von 6 Uhr und zwei Schnappverschlüsse entsprechend einer Uhrstellung von 10 und 2 Uhr am Umfang der Fenstereinheit angeordnet. Somit wird beim Einbau die Fenstereinheit schräg zum Seitenwandpaneel mit der Zentriereinrichtung in das allenfalls notwendige Gegenstück am Seitenwandpaneel gestellt und danach in Richtung des Seitenwandpaneels geklappt, worauf die Schnappverschlüsse in die Gegenstücke am Seitenwandpaneel od. dgl. bzw. damit verbundenen Bauteilen oder direkt in oder hinter dem Seitenwandpaneel einrasten.

Gemäß einer einfachen Ausführungsvariante der Erfindung ist vorgesehen, dass die Zentriereinrichtung durch zumindest eine vorzugsweise am unteren Rand des Abdeckrahmens oder des inneren Fensterrahmens angeordnete vorzugsweise halbkreisförmige Zentriernase od. dgl. gebildet ist, welche in eine entsprechende komplementäre Ausbuchtung am Seitenwandpaneel od. dgl. bzw. damit verbundenen Bauteilen aufsetzbar ist. Durch die halbkreisförmige Gestaltung der Zentriernase wird die Gefahr einer Beschädigung derselben oder des allfälligen Gegenstückes am Seitenwandpaneel od. dgl. reduziert.

Um eine sichere Verbindung zwischen Fenstereinheit und Seitenwandpaneel zu erreichen, ist vorgesehen, dass die Fenstereinheit Einrichtungen zur Verriegelung der Schnappverschlüsse aufweist, wodurch eine Lösung der Verbindung durch Vibrationen oder durch Unbefugte verhindert wird.

Um lose Bestandteile zu vermeiden, welche eine Gefahren- oder zumindest Geräuschquelle darstellen können, sind vorteilhafterweise alle Teile der Zentriereinrichtung und der Schnappverschlüsse sowie der allfälligen Einrichtungen zur Verriegelung der Schnappverschlüsse jeweils mit einem anderen Teil verbunden. Dadurch wird verhindert, dass bei der Montage oder Demontage Kleinteile hinter die Seitenwandpaneele fallen und diese in aufwendiger Arbeit gesucht und entfernt werden müssen.

Gemäß einer vorteilhaften Ausführungsform der Erfindung ist jeder Schnappverschluss durch ein mit der Fenstereinheit verbundenes Federelement und die Einrichtung zur Verriegelung des Schnappverschlusses durch ein auf dem Federelement drehbar gelagertes Sicherungselement (24) gebildet, mit dem der Schnappverschluss ver- und entriegelbar ist. Dies stellt eine kostengünstige und effiziente Realisierung eines Schnappverschlusses mit integrierter Verriegelungseinrichtung dar. Das Federelement ist vorzugsweise durch eine Stahlfeder gebildet.

Bei Verwendung einer starren Sonnenblende können die Gegenstücke zu den Schnappverschlüssen zur Verbindung mit einem mit dem Seitenwandpaneel od. dgl. vorzugsweise über Schrauben od. dgl. verbindbaren Sonnenblendenführung ausgebildet sein. Somit dient die Sonnenblendenführung gleichzeitig als Führung für die Sonnenblende und als Gegenstück zu den Schnappverschlüssen. Die Sonnenblendenführung wird auf die nicht sichtbare Rückseite der Seitenwandpaneele vor dessen Montage in der Flugzeugkabine montiert.

Um auch einen raschen und einfachen Wechsel der Bestandteile der Fenstereinheit, insbesondere der Fensterscheibe zu ermöglichen, sind gemäß einem weiteren Erfindungsmerkmal der äußere Fensterrahmen und der innere Fensterrahmen über mindestens drei Schnappverschlüsse lösbar miteinander verbunden. Die beiden Fensterrahmen können mit entsprechendem Werkzeug vom Wartungspersonal rasch getrennt werden und beispielsweise die dazwischenliegende Fensterscheibe ausgewechselt werden.

Vorteilhafterweise sind die Schnappverschlüsse durch am inneren Fensterrahmen angeordnete und in entsprechende Schlitze im äußeren Fensterrahmen einschnappbare Haken gebildet.

Derart gestaltete Schnappverschlüsse sind insbesondere mit Hilfe von Spritzgußverfahren, welche zur Herstellung der Bestandteile solcher Fenstereinheiten in der Flugzeugtechnik üblich sind, sehr billig herzustellen.

Zum einfachen Tausch bzw. zur einfachen Montage weiterer Komponenten der Fenstereinheit, insbesondere der Sonnenblende, des Rollos od. dgl. ist erfindungsgemäß weiters vorgesehen, daß der Abdeckrahmen und der äußere Fensterrahmen über zumindest drei Verschlüsse lösbar miteinander verbunden sind. Somit kann der Abdeckrahmen mit entsprechendem Werkzeug vom Wartungspersonal rasch von der Einheit bestehend aus innerem und äußerem Fensterrahmen sowie dazwischenliegender Fensterscheibe getrennt werden und die Einzelbestandteile, insbesondere die vor Beschädigung anfälligere Sonnenblende od. dgl. ausgetauscht werden.

Gemäß einer vorteilhaften Ausführungsvariante sind der Abdeckrahmen und der äußere Fensterrahmen über zumindest zwei Bajonettverschlüsse und zumindest einen Schnappverschluß lösbar miteinander verbunden. Dies stellt eine sichere und einfach herzustellende Variante der Verbindung dar.

Weitere Merkmale werden anhand der Zeichnungen näher erläutert, in welchen ein Ausführungsbeispiel der erfindungsgemäßen Fenstereinheit und ihrer Befestigung am Seitenwandpaneel dargestellt ist.

Darin zeigen
- Fig. 1: einen Schnitt durch den Teil eines Flugzeugrumpfs im Bereich einer Fensterscheibe,
- Fig. 2: eine Ansicht auf einen Teil der Seitenwandverkleidung von außen in Richtung Flugzeugkabine,
- Fig. 3: eine perspektivische Prinzipskizze zur Veranschaulichung des Einbaus der Fenstereinheit in die Öffnung eines Seitenwandpaneels,
- Fig. 4: eine Ansicht einer Fenstereinheit und einer Sonnenblendenführung von der Flugzeugkabine aus,
- Fig. 5: eine Ansicht der Sonnenblendenführung von der Flugzeugkabine aus,
- Fig. 6: einen Schnitt durch die Fenstereinheit nach Fig. 4 entlang der Schnittlinie VI-VI,
- Fig. 7: eine perspektivische Ansicht eines Abdeckrahmens einer Fenstereinheit von außen,
- Fig. 8: einen Schnitt durch die Fenstereinheit nach Fig. 4 entlang der Schnittlinie VIII-VIII,
- Fig. 9: eine perspektivische Ansicht des Schnappverschlusses nach Fig. 8,
- Fig. 10: einen Schnitt durch die Fenstereinheit nach Fig. 4 entlang der Schnittlinie X-X
- Fig. 11: das Detail A aus Fig. 6 in vergrößerter Darstellung,
- Fig. 12: das Detail B aus Fig. 6 in vergrößerter Darstellung, und
- Fig. 13: das Detail gemäß Fig. 12 in einer anderen Ausführungsform.

In manchen Darstellungen ist zum besseren Verständnis jeweils die Seite außerhalb des Flugzeuginnenraumes mit "O" (outboard) und die Seite der Flugzeugkabine mit "I" (inboard) gekennzeichnet.

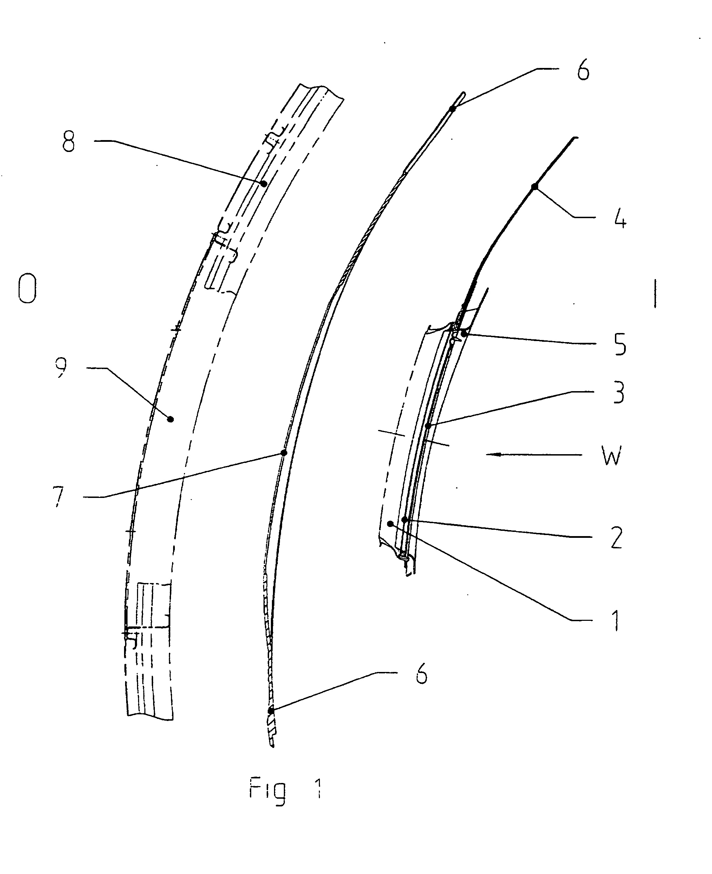

In Fig. 1 ist der Teil eines Flugzeugrumpfes im Bereich eines Fensters dargestellt. Die Fenstereinheit W besteht aus einem äußeren Fensterrahmen 1, einer Fensterscheibe 2, einem inneren Fensterrahmen 3 und allenfalls einer zwischen dem inneren Fensterrahmen 3 und einem Abdeckrahmen 5 angeordneten Sonnenblende 4. Anstelle der Sonnenblende 4 kann auch ein Rollo od. dgl. (nicht gezeigt) eingesetzt werden. Bei der Fenstereinheit W kann auch gänzlich auf einen solchen Sonnenschutz verzichtet werden. In einem solchen Fall kann der Abdeckrahmen 5 entfallen bzw. der innere Rahmen 3 in Form des Abdeckrahmens 5 ausgebildet sein. Erfindungsgemäß wird die Fenstereinheit W mit einem Seitenwandpaneel 6, welches zur Gestaltung des Flugzeuginnenraumes dient, lösbar verbunden. Zu diesem Zweck befindet sich im Seitenwandpaneel 6 eine entsprechende Öffnung 7, in welche die Fenstereinheit W einsetzbar ist. Hinter dem Seitenwandpaneel 6 befindet sich die Außenwand 8 des Flugzeuges mit entsprechend angeordneten Strukturscheiben 9. Die Strukturscheiben 9 müssen dem großen Druckunterschied zwischen Flugzeugkabine I und der Außenseite O des Flugzeuges standhalten, weshalb sie üblicherweise aus Quarzglas hergestellt werden. Demgegenüber wird die Fensterscheibe 2 der Fenstereinheit W meist aus Acryl in ebener Form hergestellt und durch die entsprechend dem Flugzeugrumpf gewölbten Fensterrahmen 1, 3 gebogen.

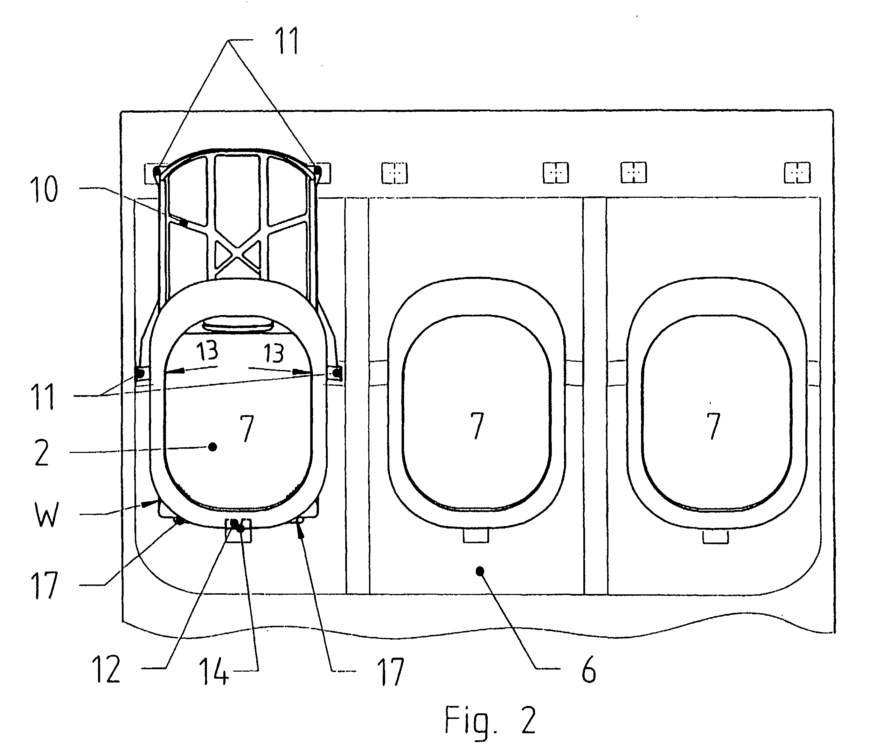

Fig. 2 zeigt ein Seitenwandpaneel 6 zur Aufnahme von 3 Fenstereinheiten W in der Ansicht von außen O in Richtung Flugzeugkabine I. Oberhalb der linkeren Öffnung 7 im Seitenwandpaneel 6 ist eine Sonnenblendenführung 10 über vier Schrauben 11 od. dgl. mit dem Seitenwandpaneel 6 verbunden. Die Sonnenblendenführung 10 weist neben der Aufgabe der Führung einer Sonnenblende 4 der Fenstereinheit W in eingebautem Zustand auch die zur Verbindung der Fenstereinheit W mit dem Seitenwandpaneel 6 allenfalls notwendigen Bauteile auf. Erfindungsgemäß weist die Fenstereinheit W zumindest eine Zentriereinrichtung und zumindest zwei Schnappverschlüsse 13 auf. Die Sonnenblendenführung 10 enthält die allenfalls notwendigen Gegenstücke der Schnappverschlüsse 13 an der Fenstereinheit W. Ebenso könnten diese natürlich direkt am Seitenwandpaneel 6 vorgesehen sein. Am Seitenwandpaneel 6 ist das zur Zentriereinrichtung der Fenstereinheit W komplementär geformte Gegenstück ausgebildet. In der dargestellten Ausführungsform handelt es sich bei der Zentriereinrichtung um eine Zentriernase 12 in Gestalt einer halbkreisförmige Ausformung an der unteren Seite (entsprechend einer Uhrstellung von 6 Uhr) der Fenstereinheit W, welche am Abdeckrahmen 5 angeordnet ist und um eine zur Zentriernase 12 komplementär gestaltete halbkreisförmige Ausbuchtung 14 am unteren Rand der Öffnung 7 im Seitenwandpaneel 6. Beidseitig von der Zentriernase 12 sind zwei Lappen 17 angeordnet, welche zur Verbindung des Abdeckrahmens 5 mit dem äußeren Fensterrahmen 1 einerseits und als unterer Anschlag für die Sonnenblende 4 andererseits dienen. Die Sonnenblendenführungen 10, welche im gegebenen Fall für die Verbindung der Fenstereinheit W mit dem Seitenwandpaneel 6 notwendig sind, werden vor Montage der Seitenwandpaneele 6 in der Flugzeugkabine mit diesen verbunden.

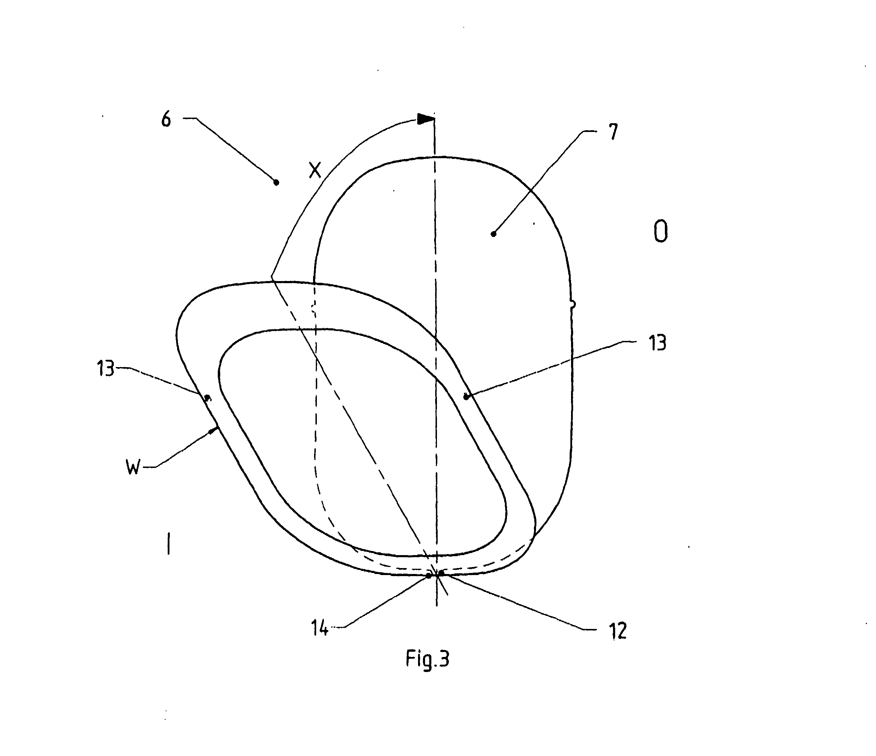

Fig. 3 veranschaulicht das Prinzip des Einbaus der Fenstereinheit W in eine Öffnung 7 im Seitenwandpaneel 6. Zum Einbau wird die Fenstereinheit W schräg zum Seitenwandpaneel 6 mit der Zentriernase 12 in ein entsprechend komplementär gestaltetes Element 14 am unteren Rand der Öffnung 7 des Seitenwandpaneels 6 gestellt und danach in Richtung des Pfeiles X zum Seitenwandpaneel 6 geklappt. Die zwei Schnappverschlüsse 13 dienen zur lösbaren Verbindung der Fenstereinheit W mit dem Seitenwandpaneel 6 bzw. damit verbundenen Elementen. Zusätzlich können Einrichtungen zur Verriegelung der Schnappverschlüsse vorgesehen sein. Ebenso einfach und rasch kann die Fenstereinheit W auch wieder demontiert werden, indem die allfälligen Verriegelungen entriegelt und die Schnappverschlüsse 13 geöffnet werden und die Fenstereinheit W entgegen der Richtung des Pfeiles X nach vorne geschwenkt und entnommen wird.

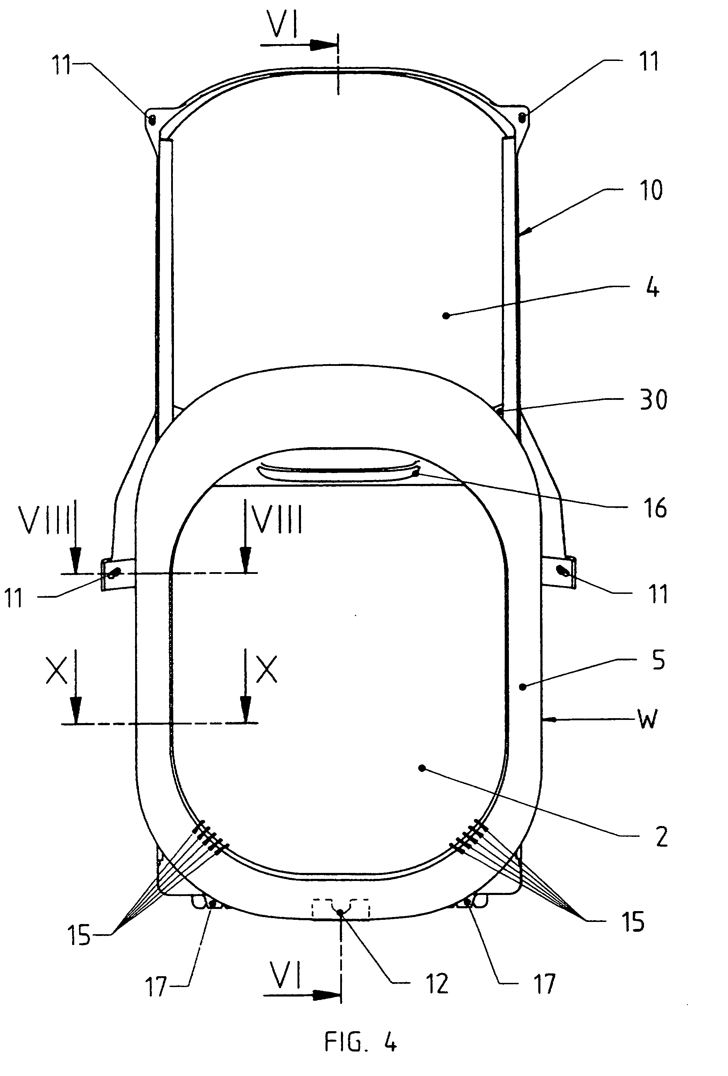

In Fig. 4 ist eine Fenstereinheit W und eine Sonnenblendenführung 10 von der Flugzeugkabine I aus gesehen, dargestellt. Die Fensterscheibe 2 kann Entlüftungsbohrungen 15 mit bestimmtem Durchmesser und in bestimmter Anzahl aufweisen. An der Hinterseite des Abdeckrahmens 5 ist die Zentriereinrichtung in Form einer Zentriernase 12 (strichliert gezeichnet) in der Mitte der Unterkante der Fenstereinheit W und beidseitig der Zentriernase 12 angeordnete Lappen 17 vorgesehen. Vorteilhafterweise werden die Zentriemase 12 und die Lappen 17 in einem Arbeitsgang mit dem Abdeckrahmen 5, üblicherweise im Spritzgußverfahren aus thermoplastischen Kunststoffen hergestellt. Oberhalb der Fenstereinheit W ist die Sonnenblendenfürhrung 10 dargestellt, welche normalerweise mit dem hier nicht dargestellten Seitenwandpaneel 6 mit Hilfe von Schrauben 11 od. dgl. verbunden wird. In der Sonnenblendenführung 10 wird die Sonnenblende 4 so geführt, daß eine Bewegung der Sonnenblende 4 im wesentlichen nur in vertikaler Richtung möglich ist. Dabei muß einerseits eine leichte Verschiebbarkeit und andererseits ein Halten der Sonnenblende 4 in jeder Stellung möglich sein. Der untere Teil 30 der Sonnenblende 4 ist aus einem härteren Material hergestellt als die übrige Sonnenblende 4 und beinhaltet auch einen Griff 16 für eine manuelle Verschiebbarkeit der Sonnenblende 4. Im Bereich der beiden unteren Schrauben 11 od. dgl. der Sonnenblendenführung 10 sind die Schnappverschlüsse 12 (nicht sichtbar) zur lösbaren Verbindung der Fenstereinheit W mit dem Seitenwandpaneel bzw. der Sonnenblendenführung 10 vorgesehen.

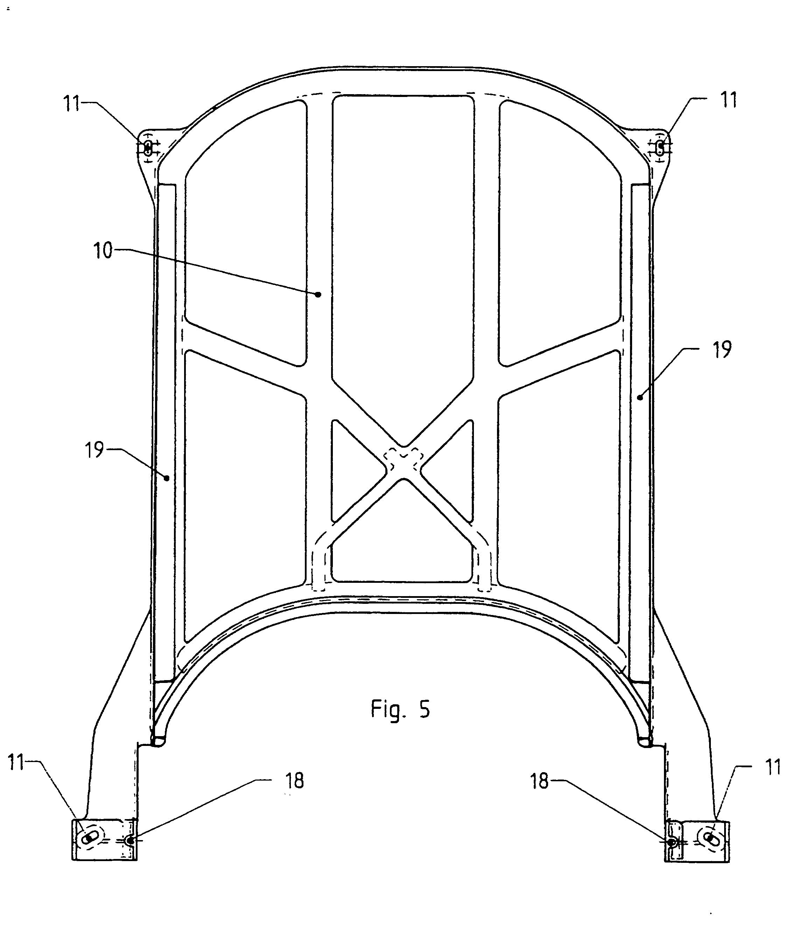

Fig. 5 zeigt eine Ansicht der Sonnenblendenführung 10, welche aus Gründen von Materialund somit Gewichtseinsparung gitterartig aufgebaut sein kann. Seitlich sind Führungsschienen 19 zur Führung der Sonnenblende 4 angeordnet. Im Bereich der beiden unteren Schrauben 11 sind Positioniereinrichtungen 18 vorgesehen, welche in entsprechende Gegenstücke am Seitenwandpaneel 6 eingreifen und zur exakten Positionierung der Sonnenblendenführung 10 am Seitenwandpaneel 6 dienen. Dadurch wird in der Folge auch eine exakte Positionierung der Fenstereinheit W in der Öffnung 7 des Seitenwandpaneels 6 gewährleistet.

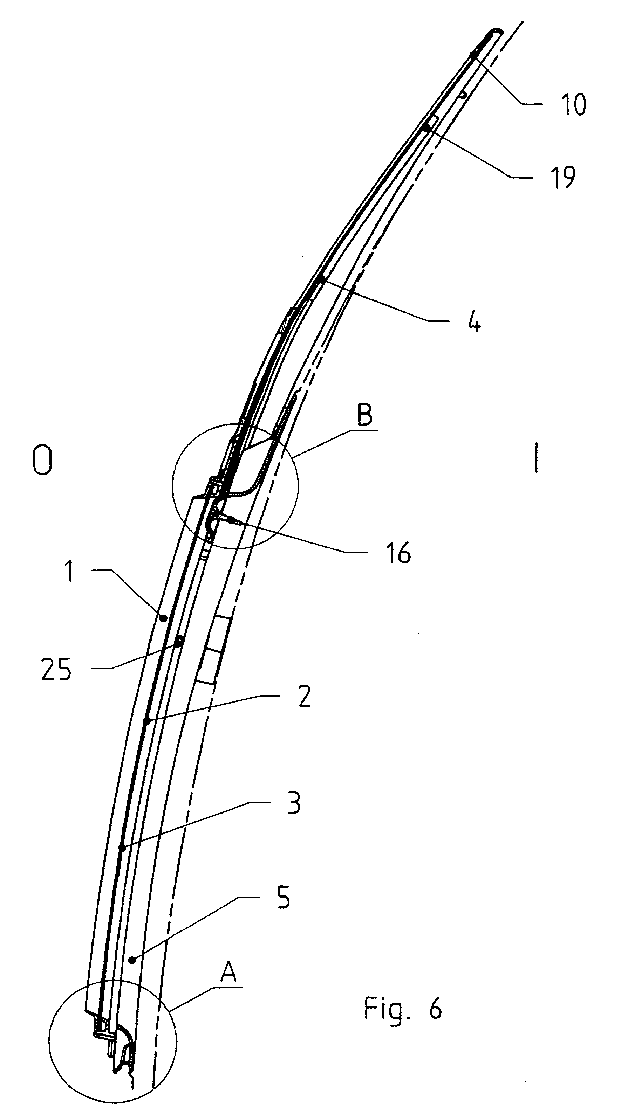

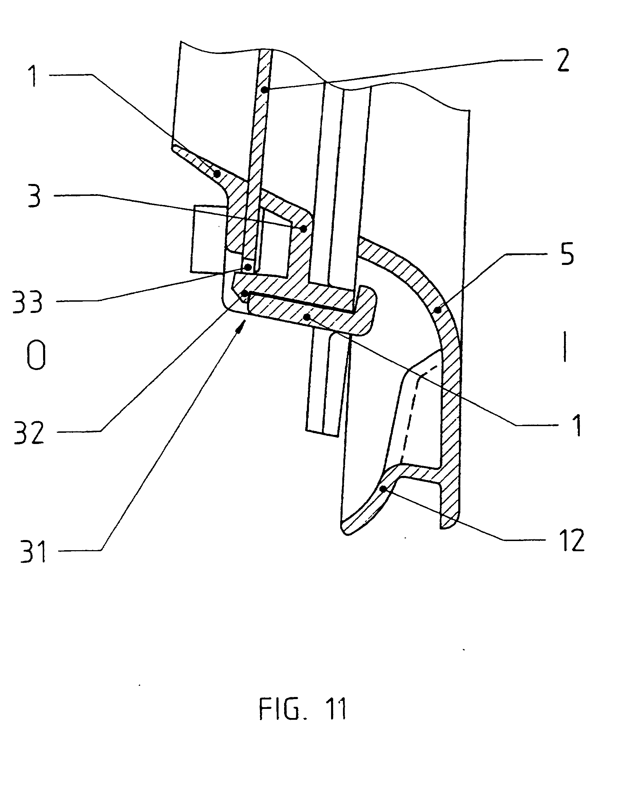

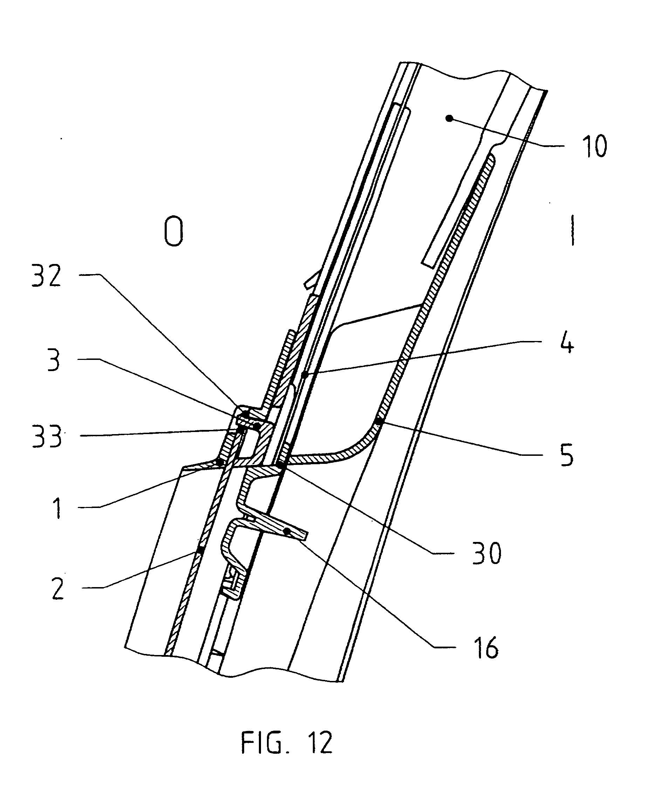

In Fig. 6 ist ein Schnitt durch die Fenstereinheit W gemäß Fig. 4 entlang der Schnittlinie VI-VI dargestellt, aus der die Wölbung der Fenstereinheit W entsprechend der Form des Flugzeuginnenraums ersichtlich ist. Die Wölbung der Fensterscheibe 2 wird durch die Einspannung zwischen dem äußeren Fensterrahmen 1 und dem inneren Fensterrahmen 3 erzwungen. Die Sonnenblende 4, welche über den Griff 16 verschiebbar ist, ist zwischen dem inneren Fensterrahmen 3 und dem Abdeckrahmen 5 angeordnet. Die Details A und B sind in den Figuren 11 und 12 in größerem Maßstab dargestellt. In der Schnittdarstellung ist auch der Innensechskant 25 des Sicherungselements eines Schnappverschlusses ersichtlich, welcher weiter unten beschrieben wird.

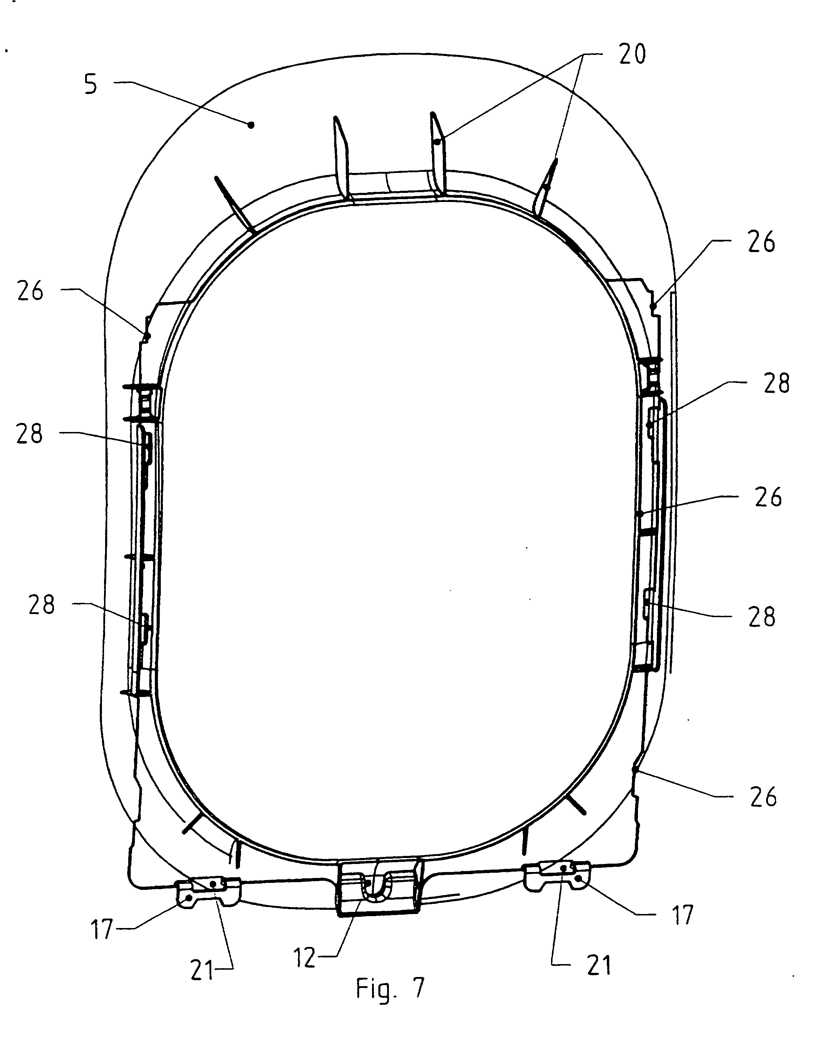

Aus der perspektivischen Ansicht des Abdeckrahmens 5 einer Fenstereinheit W von außen O gesehen gemäß Fig. 7 ist die Zentriereinrichtung in Form einer Zentriernase 12 besser ersichtlich. Beiderseits der Zentriernase 12 sind zwei Lappen 17 mit einer Öffnung 21 angeordnet, in welchen Schnapphaken des äußeren Fensterrahmens 1 eingreifen (siehe weiter unten). Die Lappen 17 stellen auch einen unteren Anschlag für die Sonnenblende 4 dar. Zur Erhöhung der Festigkeit sind am Abdeckrahmen 5 Versteifungsrippen 20 angeordnet, welche insbesondere bei der Herstellung nach dem Spritzgußverfahren leicht berücksichtigt werden können. Ersichtlich sind auch die Führungsleisten 26 für die Sonnenblende 4 und die Schlitze 28 für die Bajonettverschlüsse des äußeren Fensterrahmens 1, welche ebenfalls weiter unten beschrieben werden.

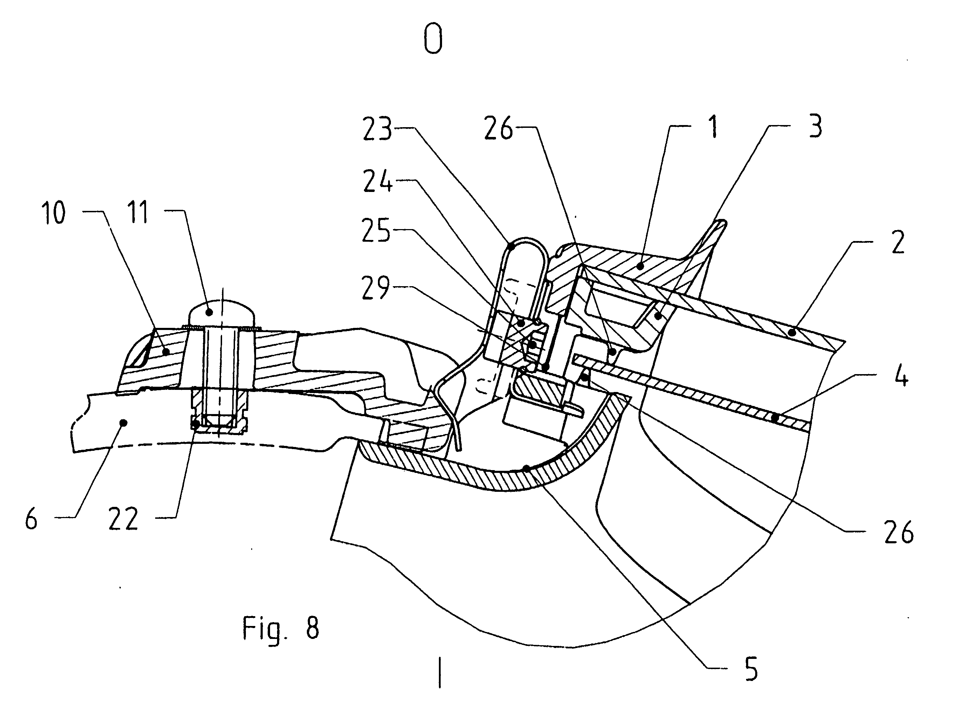

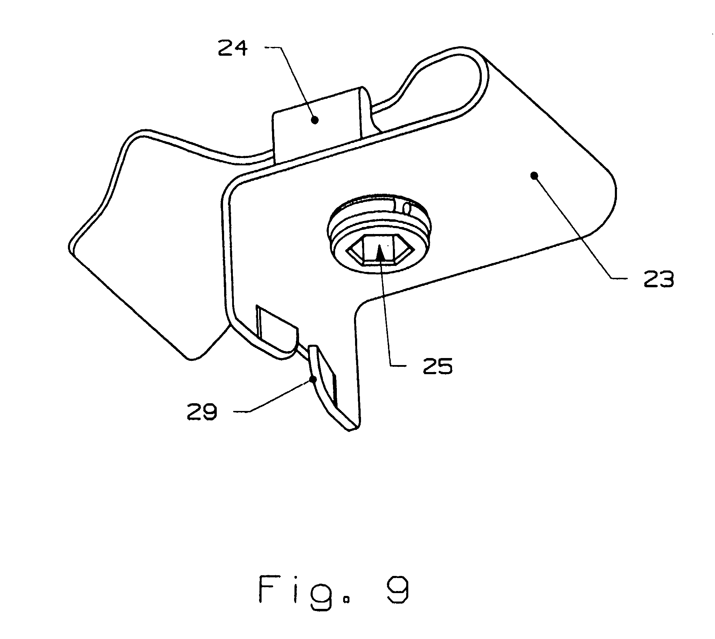

Fig. 8 zeigt einen Schnitt durch die Fenstereinheit W nach Fig. 4 entlang der Schnittlinie VIII-VIII. Am Seitenwandpaneel 6 ist über Schrauben 11, welche beispielsweise in Gewindeeinsätze 22, die in das Seitenwandpaneel 6 eingeklebt werden, eingreifen, die Sonnenblendenführung 10 befestigt. Ebenso kann die Sonnenblendenführung 10 direkt an das Seitenwandpaneel 6 geklebt oder das Seitenwandpaneel 6 selbst in Form der Sonnenblendenführung 10 ausgeführt werden. Am Abdeckrahmen 5 ist der Schnappverschluß 13 in Form eines Federelements 23, vorzugsweise einer Stahlfeder, angeordnet. Zur Befestigung ist das Federelement 23 beispielsweise mit einem Widerhaken 29 an der entsprechenden Stelle versehen (siehe Fig. 9), welcher in eine geeignete Ausnehmung am Abdeckrahmen 5 eingreift. Beim Kippen der Fenstereinheit W in die Öffnung 7 des Seitenwandpaneels 6 wird zuerst der flache Bereich des Federelements 23 durchlaufen, bevor das Ende des Federelements 23 zusammengedrückt wird und danach in ein entsprechendes Gegenstück der Sonnenblendenführung 10 bzw. hinter der Wand der Sonnenblendenführung 10 einrastet. Zur Verriegelung des Schnappverschlusses 13 ist an dem Federelement 23 ein Sicherungselement 24 drehbar gelagert, wobei die Drehung durch ein Werkzeug, welches in eine entsprechende Öffnung, beispielsweise einen Innensechskant 25 eingeführt werden kann, vollzogen werden kann. Wie aus Fig. 9 besser ersichtlich, ist das Sicherungselement 24 in Form zweier gegenüberliegender Haken gestaltet, welche in der in Fig. 9 dargestellten Lage außerhalb des Bereiches des Federelements 23 gelegen sind, wodurch das Federelement 23 verformbar ist. In einer demgegenüber um 90° verschwenkten Lage, die in Fig. 8 strichliert dargestellt ist, liegen die Haken des Sicherungselements 24 an der Innenseite des Federelements 23 an, wodurch dieses blockiert wird und die Fenstereinheit W nicht aus dem Seitenwandpaneel 6 entfernt werden kann. Die Endstellungen können durch Anschläge fixiert sein. Die Öffnung des Sicherungselements 24, beispielsweise der Innensechskant 25, ist nicht sichtbar, da diese hinter der Führungsnut für die Sonnenblende 4 angeordnet ist. Durch diese verborgene Lage des Innensechskants 25 des Sicherungselements 24 wird eine Öffnung des Verschlusses der Fenstereinheit W mit dem Seitenwandpaneel 6 durch Unbefugte weitestgehend verhindert. Zur Ver- und Entriegelung wird die zwischen zwei Führungsleisten 26 verschiebbar gelagerte Sonnenblende 4 in die oberste, also geöffnete Stellung gebracht, wodurch der Innensechskant 25 des Sicherungselements 24 zugänglich wird und mit Hilfe eines entsprechenden Werkzeugs verdreht werden kann, sodaß die Fenstereinheit W verriegelt oder entriegelt werden kann. Durch die exakte Führung der Sonnenblende 4 in den Führungsleisten 26 kann die Sonnenblende 4 nicht so einfach mutwillig aus der Führung gezogen werden, was bei herkömmlichen Fenstereinheiten häufig der Fall war.

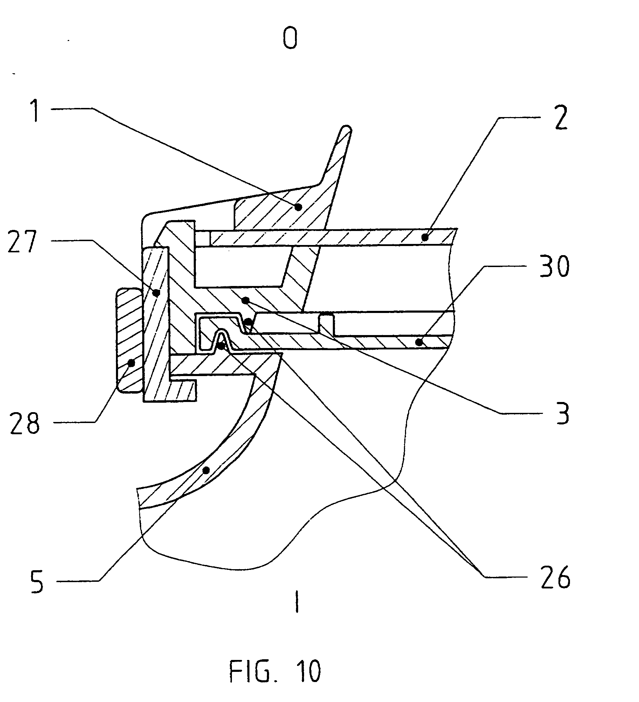

Fig. 10 zeigt einen Schnitt durch die Fenstereinheit W nach Fig. 4 entlang der Schnittlinie X-X. Aus dieser Darstellung ist ein Teil der erfindungsgemäßen Verbindung zwischen äußerem Fensterrahmen 1 und Abdeckrahmen 5 ersichtlich, welcher im dargestellten Ausführungsbeispiel durch vier Bajonettverschlüsse und zwei Schnappverschlüsse gebildet wird. Die Bajonettverschlüsse sind durch Haken 27 am äußeren Fensterrahmen 1 gebildet, welche in entsprechende Schlitze 28 im Abdeckrahmen 5 ragen. Wie an der Lage der Schlitze 28 im Abdeckrahmen 5 gemäß Fig. 7 ersichtlich, sind jeweils zwei Bajonettverschlüsse an den vertikalen Seiten der Fenstereinheit W angeordnet. Die Bajonettverschlüsse dienen zur Positionierung des äußeren Fensterrahmens 1 samt Fensterscheibe 2 und innerem Fensterrahmen 2 im Abdeckrahmen 5. Zur Sicherung der Bajonettverschlüsse sind an der unteren Seite zwei Schnappverschlüsse angeordnet, die durch entsprechende Haken am äußeren Fensterrahmen 1 gebildet werden, welche in entsprechende Öffnungen 21 im Abdeckrahmen 5 eingreifen. In der Schnittdarstellung ist auch der untere Teil 30 der Sonnenblende 4 dargestellt, der für eine exakte Führung zwischen den Führungsleisten 26 am inneren Fensterrahmen 3 und am Abdeckrahmen 5 entsprechende Gestalt aufweist. Durch die entsprechende Führung ist eine Fixierung der Sonnenblende 4 in jeder beliebigen Stellung möglich.

Fig. 11 zeigt das Detail A der Fig. 6 in vergrößerter Darstellung. Der äußere Fensterrahmen 1 und der innere Fensterrahmen 3 sind erfindungsgemäß ebenfalls durch eine Gruppe von Schnappverschlüssen verbunden, von denen ein Schnappverschluß 31 in dieser Schnittansicht ersichtlich ist. In der gezeigten Ausführungsform besteht der Schnappverschluß 31 aus einem am inneren Fensterrahmen 3 befestigten bzw. vorzugsweise mit diesem in einem Fertigungsschritt hergestellten Haken 32, der durch einen Schlitz 33 des äußeren Fensterrahmens 1 eingeschoben werden kann, und dabei elastisch verformt wird. Ist der Haken 32 vollständig in den Schlitz 33 eingeschoben, so schnappt er ein und bildet eine sichere Verbindung zwischen den beiden Fensterrahmen 1, 3. Für eine sichere Verbindung sind mindestens 3, vorzugsweise sechs Schnappverschlüsse entlang dem Umfang der Fenstereinheit W verteilt. Natürlich können die Schnappverschlüsse auch beliebige andere Gestalt haben. Durch die Verbindung des äußeren Fensterrahmens 1 mit dem inneren Fensterrahmen 3 wird die Fensterscheibe 2 dazwischen in der Lage gehalten. Theoretisch kann die Einheit bestehend aus äußerem Fensterrahmen 1, Fensterscheibe 2 und innerem Fensterrahmen 3 einstückig beispielsweise aus Acryl hergestellt sein, wobei bei einem Wechsel der Fensterscheibe 2 die gesamte Einheit 1, 2, 3 getauscht werden müßte. Schließlich ist in dieser Abbildung noch die am Abdeckrahmen 5 angeordnete Zentriemase 12 ersichtlich.

In Fig. 12 ist das Detail B der Fig. 6 vergrößert dargestellt, wobei auch hier ein Schnappverschluß zur Verbindung des äußeren Fensterrahmens 1 mit dem inneren Fensterrahmen 3 bestehend aus einem am inneren Fensterrahmen 3 befestigten oder mit diesem einstückig hergestellten Haken 32, der in einen Schlitz 33 im äußeren Fensterrahmen 1 einschnappt, ersichtlich ist. Darüberhinaus zeigt die Abbildung den Griff 16 der Sonnenblende 4, welche sich hier in der obersten Position befindet. Der unteren Teil 30 der Sonnenblende 4 ist samt Griff 16 für eine bessere Handhabbarkeit entsprechend geformt. Im oberen Teil der Abbildung ist ein Teil der Sonnenblendenführung 10 erkennbar.

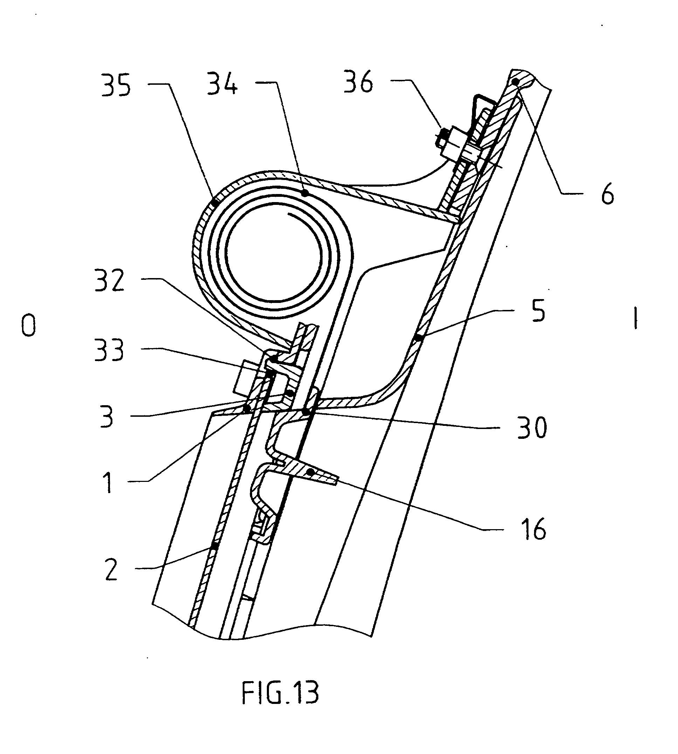

Fig. 13 zeigt eine Abänderung der Fig. 12 bei Verwendung eines Rollos 34 anstelle einer starren Sonnenblende 4, wie es bei manchen Anwendungen notwendig oder zweckmäßig ist. Zum Schutz des Rollos 34 ist eine Abdeckung 35 vorgesehen, welche beispielsweise mit Hilfe einer Verbindungsschraube 36 am Seitenwandpaneel 6 befestigt wird.

Der äußere und innere Fensterrahmen 1, 3, der Abdeckrahmen 5 sowie etwaige andere Bestandteile der Fenstereinheit W bestehen vorzugsweise aus thermoplastischem Kunststoff, und werden im Spritzgußverfahren hergestellt. Dies ermöglicht eine kostengünstige Herstellung unter gleichzeitiger Implementierung der für die Verbindungselemente notwendigen Elemente.

Selbstverständlich können verschiedene konstruktive Abänderungen vorgenommen werden soweit sie durch den Wortlaut der Ansprüche gedeckt sind. Insbesondere kann die Anzahl und Anordnung der verschiedenen Verbindungseinheiten (Schnappverschlüsse, Bajonettverschlüsse) verändert und an den jeweiligen Anwendungsfall optimal angepaßt werden.

## Patentansprüche

1. Fenstereinheit (W) für Flugzeugkabinen, bestehend aus einem äußeren Fensterrahmen (1), einem inneren Fensterrahmen (3), einer dazwischenliegenden Fensterscheibe (2), allenfalls mit einer Sonnenblende (4) oder einem Rollo (34), welche(s) zwischen dem inneren Fensterrahmen (3) und einem allfälligen Abdeckrahmen (5) angeordnet ist, wobei die Fenstereinheit (W) in die Öffnung (7) eines Seitenwandpaneels (6) in der Flugzeugkabine einsetzbar ist, **dadurch gekennzeichnet, dass** die Fenstereinheit (W) zur lösbaren Verbindung mit dem Seitenwandpaneel (6) bzw. damit verbundenen Bauteilen eine Zentriereinrichtung und zumindest zwei Schnappverschlüsse (13) aufweist.

2. Fenstereinheit nach Anspruch 1, **dadurch gekennzeichnet, dass** die Zentriereinrichtung an der unteren Seite der Fenstereinheit (W) entsprechend einer Uhrstellung von 6 Uhr und zwei Schnappverschlüsse (13) entsprechend einer Uhrstellung von 10 und 2 Uhr am Umfang der Fenstereinheit (W) angeordnet sind.

3. Fenstereinheit nach Anspruch 1 oder 2, **dadurch gekennzeichnet, dass** die Zentriereinrichtung durch zumindest eine Zentriernase (12) gebildet ist, welche in eine entsprechende komplementäre Ausbuchtung (14) am Seitenwandpaneel (6) bzw. damit verbundenen Bauteilen aufsetzbar ist.

4. Fenstereinheit nach Anspruch 3, **dadurch gekennzeichnet, dass** die Zentriernase (12) am unteren Rand des Abdeckrahmens (5) oder des inneren Fensterrahmens (3) angeordnet ist.

5. Fenstereinheit nach Anspruch 3 oder 4, **dadurch gekennzeichnet, dass** die Zentriernase (12) halbkreisförmig ausgebildt ist.

6. Fenstereinheit nach mindestens einem der Ansprüche 1 bis 5, **dadurch gekennzeichnet, dass** die Fenstereinheit (W) Einrichtungen zur Verriegelung der Schnappverschlüsse (13) aufweist.

7. Fenstereinheit nach mindestens einem der Ansprüche 1 bis 6, **dadurch gekennzeichnet, dass** alle Teile der Zentriereinrichtung und der Schnappverschlüsse (13) sowie der allfälligen Einrichtungen zur Verriegelung der Schnappverschlüsse (13) jeweils mit einem anderen Teil verbunden sind.

8. Fenstereinheit nach Anspruch 7, **dadurch gekennzeichnet, dass** jeder Schnappverschluss (13) durch ein mit der Fenstereinheit (W) verbundenes Federelement (23) und die Einrichtung zur Verriegelung des Schnappverschlusses (13) durch ein auf dem Federelement (23) drehbar gelagertes Sicherungselement (24) gebildet ist, mit dem der Schnappverschluss ver- und entriegelbar ist.

9. Fenstereinheit nach Anspruch 1, **dadurch gekennzeichnet, dass** der äußere Fensterrahmen (1) und der innere Fensterrahmen (3) über mindestens drei Schnappverschlüsse (31) lösbar miteinander verbunden sind.

10. Fenstereinheit nach Anspruch 9, **dadurch gekennzeichnet, dass** die Schnappverschlüsse (31) durch am inneren Fensterrahmen (3) angeordnete und in entsprechende Schlitze (33) im äußeren Fensterrahmen (1) einschnappbare Haken (32) gebildet sind.

11. Fenstereinheit nach Anspruch 1 mit vorhandenen Abdeckrahmen (5), **dadurch gekennzeichnet, dass** der Abdeckrahmen (5) und der äußere Fensterrahmen (1) über zumindest drei Verschlüsse lösbar miteinander verbunden sind.

12. Fenstereinheit nach Anspruch 11, **dadurch gekennzeichnet, dass** der Abdeckrahmen (5) und der äußere Fensterrahmen (1) über zumindest zwei Bajonettverschlüsse (27, 28) und zumindest einen Schnappverschluss lösbar miteinander verbunden sind.

## Claims

1. A window unit (W) for aircraft cabins, comprising an outer window frame (1), an inner window frame (3), a window pane (2) lying between them, and possibly having a sun-visor (4) or a roller blind (34) arranged between the inner window frame (3) and a possible covering frame (5), the window unit (W) being insertable into the opening (7) in a side-wall panel (6) in the aircraft cabin, **characterised in that** the window unit (W) has a centering device and at least two snap fastening means (13) to detachably connect it to the side-wall panel (6), or to components connected thereto, respectively.

2. A window unit according to claim 1, **characterised in that** the centering device is arranged on the lower side of the window unit (W) corresponding to a clock position of 6 o'clock, and two snap fastening means (13) are arranged on the periphery of the window unit (W) corresponding to a clock position of 10 and 2 o'clock.

3. A window unit according to claim 1 or 2, **characterised in that** the centering device is formed by at least one centering lug (12) capable of being placed into a corresponding, complementary indentation (14) at the side-wall panel (6) or at components connected thereto, respectively.

4. A window unit according to claim 3, **characterised in that** the centering lug (12) is arranged on the lower rim of the covering frame (5) or of the inner window frame (3).

5. A window unit according to claim 3 or 4, **characterised in that** the centering lug (12) is formed to be semicircular.

6. A window unit according to at least one of claims 1 to 5, **characterised in that** the window unit (W) comprises devices for locking the snap fastening means (13).

7. A window unit according to at least one of claims 1 to 6, **characterised in that** all parts of the centering device and of the snap fastening means (13) as well as the possible devices for locking the snap fastening means (13) are each connected with another part.

8. A window unit according to claim 7, **characterised in that** each snap fastening means (13) is formed by a spring element (23) connected to the window unit (W), and the device for locking the snap fastening means (13) is formed by a securing element (24) which is mounted rotatably on the spring element (23) and with which the snap fastening means can be locked and released.

9. A window unit according to claim 1, **characterised in that** the outer window frame (1) and the inner window frame (3) are releasably interconnected via at least three snap fastening means (31).

10. A window unit according to claim 9, **characterised in that** the snap fastening means (31) are formed by hooks (32) arranged on the inner window frame (3) and capable of being snapped into corresponding slots (33) in the outer window frame (1).

11. A window unit according to claim 1 with a covering frame (5) being provided, **characterised in that** the covering frame (5) and the outer window frame (1) are releasably interconnected via at least three fastening means.

12. A window unit according to claim 11, **characterised in that** the covering frame (5) and the outer window frame (1) are releasably interconnected via at least two bayonet-type fastening means (27, 28) and at least one snap fastening means.

## Revendications

1. Unité de fenêtre (W) pour cabines d'avion, constituée par un cadre de fenêtre extérieur (1), un cadre de fenêtre intérieur (3), une vitre de fenêtre (2) située entre ceux-ci, comprenant éventuellement un pare-soleil (4) ou un store (34), lequel est disposé entre le cadre de fenêtre intérieur (3) et un cadre de recouvrement (5) éventuel, l'unité de fenêtre (W) pouvant être insérée dans l'ouverture (7) d'un panneau de lambris de paroi latérale (6) dans la cabine d'avion, **caractérisée en ce que** l'unité de fenêtre (W) comprend, en vue de la connexion desserrable avec le panneau de lambris de paroi latérale (6) ou des composants reliés à celui-ci, un dispositif de centrage et au moins deux fermetures à ressort (13).

2. Unité de fenêtre selon la revendication 1, **caractérisée en ce que** le dispositif de centrage est disposé sur le côté inférieur de l'unité de fenêtre (W) en une position horaire correspondant à 6 heures et deux fermetures à ressort (13) en une position horaire correspondant à 10 et 2 heures sur la périphérie de l'unité de fenêtre (W).

3. Unité de fenêtre selon la revendication 1 ou 2, **caractérisée en ce que** le dispositif de centrage est formé par au moins un bec de centrage (12), lequel peut être monté dans une courbure (14) complémentaire correspondante sur le panneau de lambris de paroi latérale (6) ou les composants reliés à celui-ci.

4. Unité de fenêtre selon la revendication 3, **caractérisée en ce que** le bec de centrage (12) est disposé sur le bord inférieur du cadre de recouvrement (5) ou du cadre de fenêtre intérieur (3).

5. Unité de fenêtre selon la revendication 3 ou 4, **caractérisée en ce que** le bec de centrage (12) présente une forme demi-circulaire.

6. Unité de fenêtre selon au moins une des revendications 1 à 5, **caractérisée en ce que** l'unité de fenêtre (W) comprend des dispositifs de verrouillage des fermetures à ressort (13).

7. Unité de fenêtre selon au moins une des revendications 1 à 6, **caractérisée en ce que** toutes les pièces du dispositif de centrage et des fermetures à ressort (13) ainsi que des dispositifs éventuels sont reliées respectivement à une autre pièce en vue du verrouillage des fermetures à ressort (13).

8. Unité de fenêtre selon la revendication 7, **caractérisée en ce que** chaque fermeture à ressort (13) est formée par un élément formant ressort (23) relié à l'unité de fenêtre (W) et le dispositif de verrouillage de la fermeture à ressort (13) par un élément de sécurité (24) logé de manière rotative sur l'élément formant ressort (23), élément de sécurité avec lequel la fermeture à ressort peut être verrouillée ou déverrouillée.

9. Unité de fenêtre selon la revendication 1, **caractérisée en ce que** le cadre de fenêtre extérieur (1) et le cadre de fenêtre intérieur (3) sont reliés l'un à l'autre de manière desserrable par l'intermédiaire d'au moins trois fermetures à ressort (31 ).

10. Unité de fenêtre selon la revendication 9, **caractérisée en ce que** les fermetures à ressort (31) sont formées par des crochets (32) disposés sur le cadre de fenêtre intérieur (3) et pouvant s'enclencher dans des fentes (33) correspondantes dans le cadre de fenêtre extérieur (1).

11. Unité de fenêtre selon la revendication 1 comprenant le cadre de recouvrement (5) présent, **caractérisée en ce que** le cadre de recouvrement (5) et le cadre de fenêtre extérieur (1) sont reliés l'un à l'autre de manière desserrable par l'intermédiaire d'au moins trois fermetures.

12. Unité de fenêtre selon la revendication 11, **caractérisée en ce que** le cadre de recouvrement (5) et le cadre de fenêtre extérieur (1) sont reliés l'un à l'autre par l'intermédiaire d'au moins deux fermetures à baïonnette (27, 28) et d'au moins une fermeture à ressort.
